# EUROPEAN PATENT APPLICATION

(11) **EP 4 442 390 A1**
(43) Date of publication of application: **09.10.2024**
(21) Application number: 24160503.9
(22) Date of filing: 29.02.2024
(51) Int. Cl.: B22F 10/64, B22F 5/10, B22F 10/10, B22F 3/10, B22F 10/14, B33Y 10/00, B22F 10/73, B33Y 40/20

(54) **THREE DIMENSIONAL MODELING METHOD AND THREE DIMENSIONAL MODELING APPARATUS**

(30) Priority: 20.03.2023 JP 2023044384; 24.11.2023 JP 2023199303
(71) Applicant: Ricoh Company, Ltd., Tokyo 143-8555 (JP)
(72) Inventor: SUN, Yunsheng, Tokyo, 143-8555 (JP); TSUJI, Masato, Tokyo, 143-8555 (JP); HAYAKAWA, Shota, Tokyo, 143-8555 (JP)
(74) Representative: SSM Sandmair

(57) **Abstract**

[Problem] To improve modeling quality.

[Solution]

A three dimensional modeling method is a method for fabricating a modeled object 62 having a cavity 81 therein. The three dimensional modeling method includes a modeling step S3 of modeling the modeled object 62 with first powder 50, the modeled object 62 including an opening 82 connecting the cavity 81 and an outside of the modeled object 62;a filling step S6 of filling the cavity 81 with second powder 52 from the opening 82; a sintering step S8 of sintering a green body 63 whose cavity 81 has been filled with the second powder 52 in the filling step S6, the green body 63 resulting from the modeled object 62; and a removing step S9 of removing the second powder 52 in the cavity 81 from the opening 82.

## Description

### BACKGROUND OF THE INVENTION

### 1. Field of the Invention

The present invention generally relates to a three dimensional modeling method and a three dimensional modeling apparatus.

### 2. Description of the Related Art

As a three dimensional modeling method using powder layering (powder layering modeling method), a binder jet (BJ) method of applying a modeling liquid to a powder layer is known.

Patent Document 1 discloses a method of filling a cavity formed in a green body with powder, and sintering the green body in a state where an object is attached to the cavity.

However, in the method disclosed in Patent Document 1, there is a possibility that the modeling quality is deteriorated due to deformation of the green body during sintering.

Accordingly, it is desirable to improve the modeling quality.

### RELATED ART DOCUMENT

### PATENT DOCUMENT

Patent Document 1: Japanese Translation of PCT International Application Publication No. JP-T-2018-501398

### SUMMARY OF THE INVENTION

According to at least one aspect of the present invention, a three dimensional modeling method for fabricating a modeled object having a cavity therein is provided. The three dimensional modeling method includes modeling the modeled object with first powder, the modeled object including an opening connecting the cavity and an outside of the modeled object; filling the cavity with second powder from the opening; sintering the modeled object whose cavity has been filled with the second powder in the filling; and removing the second powder in the cavity from the opening.

### ADVANTAGEOUS EFFECT OF THE INVENTION

According to the present invention, the modeling quality can be improved.

### BRIEF DESCRIPTION OF THE DRAWINGS

FIGS. 1A and 1B are schematic diagrams illustrating a modeled object.
FIG. 2 is a block diagram illustrating a schematic configuration of a three dimensional modeling apparatus according to an embodiment of the present invention.
FIG. 3 is a diagram illustrating an example of a configuration of a modeling unit.
FIG. 4 is a hardware configuration diagram illustrating a controller.
FIG. 5 is a flowchart illustrating a three dimensional modeling method according to an embodiment of the present invention.
FIGS. 6A and 6B are schematic diagrams illustrating a first example of a structure of a modeled object.
FIGS. 7A and 7B are schematic diagrams illustrating a second example of a structure of the modeled object.
FIGS. 8A to 8C are schematic diagrams illustrating a third example of a structure of the modeled object.
FIG. 9 is a schematic diagram illustrating a fourth example of a structure of the modeled object.
FIGS. 10A and 10B are schematic diagrams illustrating a fifth example of a structure of the modeled object.
FIG. 11 is a schematic diagram illustrating a sixth example of a structure of the modeled object.
FIG. 12 is a schematic diagram illustrating a seventh example of a structure of the modeled object.
FIGS. 13A and 13B are schematic diagrams illustrating an eighth example of a structure of the modeled object.
FIGS. 14A to 14C are schematic diagrams illustrating a ninth example of a structure of the modeled object.
FIG. 15 is a cross-sectional diagram taken along line A-A in FIG. 14C.
FIG. 16 is a schematic diagram illustrating a tenth example of a structure of the modeled object.
FIG. 17 is a diagram illustrating a first example of a sealing member retaining method.
FIG. 18 is a diagram illustrating a second example of a sealing member retaining method.
FIG. 19 is a diagram illustrating an example in which a gyroid structure is provided in an internal cavity of a modeled object.
FIG. 20 is a diagram illustrating a range of a hole diameter of an opening.
FIG. 21 is a diagram illustrating a modification of the modeling unit.

### DESCRIPTION OF THE PREFERRED EMBODIMENTS

Hereinafter, embodiments will be described with reference to the accompanying drawings. In order to facilitate understanding of the description, the same reference numerals are given to the same components or elements in the drawings to the extent possible, and redundant description will be omitted.

In the following description, a modeled object 62 contains a first powder 50. The modeled object 62 is a mass formed by laminating a plurality of modeling layers 61 and is in a state before the modeling is completed. The first powder 50 may contain a metal, and for example, aluminum or aluminum alloy may be used as the metal. The first powder 50 may be made of another metal, or may be made of a material other than metal, such as ceramic. The modeled object 62 from which the excess first powder 50 has been removed by a drying treatment is referred to as a "green body 63". A finished product obtained by subjecting the green body 63 to degreasing and sintering treatments is referred to as a "three dimensionally modeled object 64".

In the following description, a second powder 52 is powder of a type differing from the first powder 50 used for modeling the modeled object 62. The second powder 52 is filled in a cavity 81 inside the green body 63 in the sintering step. The melting point of the second powder 52 is higher than the sintering temperature in a sintering step. The second powder 52 has a higher melting point than the first powder 50. For example, when the first powder 50 may contains metals, for example, aluminum or aluminum alloys, the second powder 52 may be zirconia, alumina, or the like.

The term "mixed powder" used in the following description refers to a plurality of powders mixed by the powder mixing unit 2. The mixed powder is a mixture of new powder (hereinafter, referred to as "new powder") and collected powder (hereinafter, referred to as "collected powder"). The term "new powder" is powder that has not been used for modeling in the modeling unit 3. The term "collected powder" is powder that has already been used for modeling in the modeling unit 3. The collected powder may be collected from the modeling unit 3 or the powder removing unit 5. The "mixing ratio" is a ratio of the new powder to the collected powder. The "mixing ratio" may be any ratio such as a volume ratio or a weight ratio. Note that the first powder 50, the second powder 52, the mixed powder, the new powder, and the like may also be expressed as first powder particles 50, second powder particles 52, mixed powder particles, new powder particles, and the like as necessary.

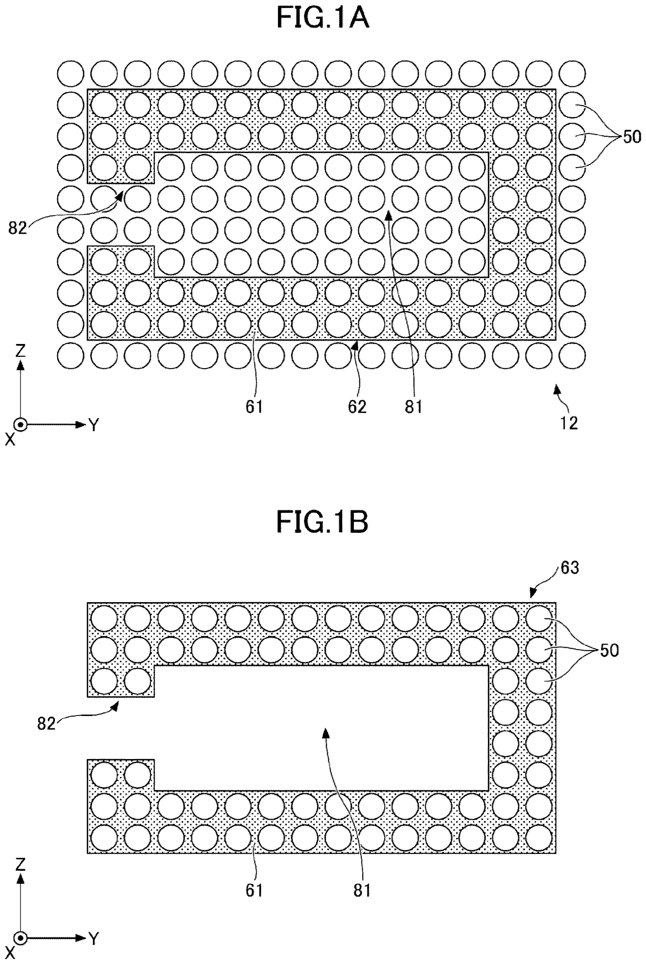

FIG. 1A and 1B are schematic diagrams illustrating examples of a modeled object 62 and a green body 63. FIG. 1A is a schematic diagram illustrating the modeled object 62. FIG. 1B is a schematic diagram illustrating the green body 63.

In FIG. 1A, a plurality of first powder particles 50 are disposed in a Y direction and a Z direction in a modeling tank 12. A modeling liquid 60 is applied to a part of the plurality of first powder particles 50 in the modeling tank 12 to form a modeling layer 61, and a plurality of modeling layers 61 are laminated in the Z direction to form a modeled object 62. The area of the plurality of first powder particles 50 outside the modeled object 62 is an area to which the modeling liquid 60 is not applied.

The drying unit 4 dries the modeling tank 12, and the powder removing unit 5 removes the first powder 50 from the area to which the modeling liquid 60 is not applied, thereby obtaining a green body 63 illustrated in FIG. 1B.

Thus, the green body 63 has a cavity 81 therein and includes an opening 82 connecting the cavity 81 and an outside of the green body 63. Hereinafter, the shape of the green body 63 will be described as having the cavity 81 and the opening 82 therein.

### <Basic Configuration of Three Dimensional Modeling Apparatus>

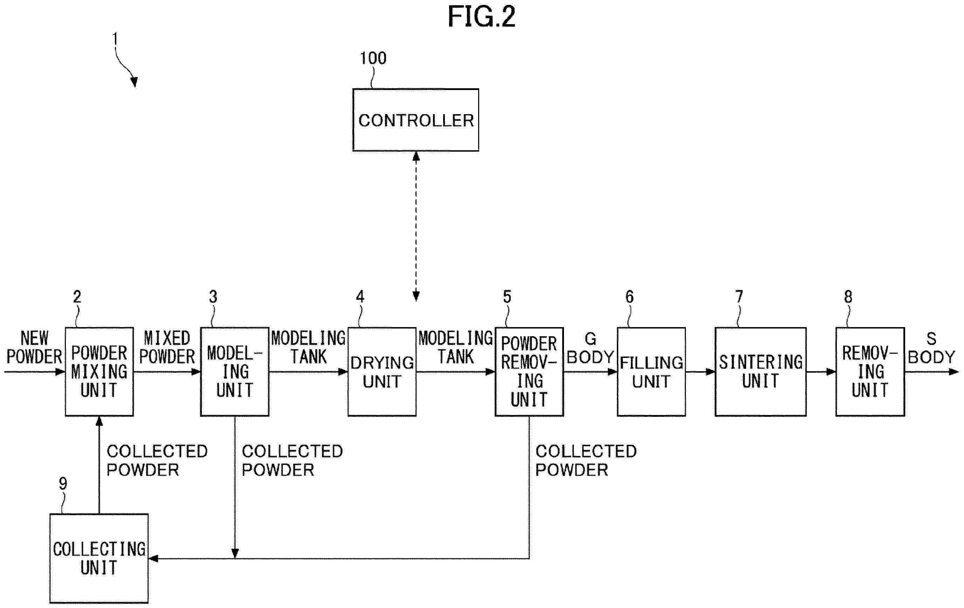

A basic configuration of a three dimensional modeling apparatus 1 according to an embodiment will be described with reference to FIGS. 2 to 4.

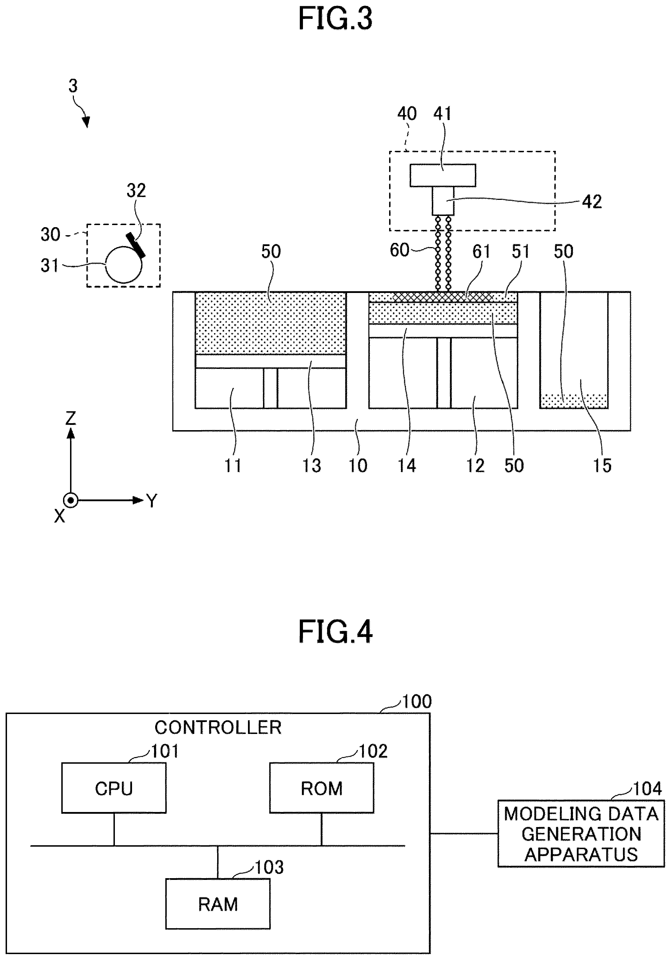

FIG. 2 is a block diagram illustrating a schematic configuration of the three dimensional modeling apparatus 1 according to the embodiment of the present invention. As the three dimensional modeling apparatus 1 according to the embodiment of the present invention, a binder jet (BJ) method that applies the modeling liquid 60 to a modeling area on the surface of a powder layer 51 (see FIG. 3) will be described. In the BJ method, the modeling liquid 60 is selectively applied to the powder layer 51, and the powder layer 51 is solidified and sintered, whereby a three dimensionally modeled object can be fabricated. The modeling liquid 60 includes, for example, a resin such as a binder, and an ink such as a solvent.

The three dimensional modeling apparatus 1 includes a powder mixing unit 2, a modeling unit 3, a drying unit 4, a powder removing unit 5, a filling unit 6, a sintering unit 7, a removing unit 8, a collecting unit 9, and a controller 100.

The powder mixing unit 2 mixes the first powder 50. As a result, the mixed powder as powder to be supplied to the modeling unit 3 is generated. The powder mixing unit 2 mixes powder (new powder) that has not been used for modeling and powder (collected powder) that has already been used for modeling and collected by the collecting unit 9. The powder mixing unit 2 can mix the powder at a desired mixing ratio based on a control instruction from the controller 100, and supply the mixed powder to the modeling unit 3.

The modeling unit 3 forms the modeled object 62 containing the first powder 50. The first powder 50 includes at least the mixed powder supplied from the powder mixing unit 2. In the present embodiment, the modeling unit 3 performs modeling by a BJ method. A part of the first powder 50 used in the modeling unit 3 is collected as collected powder by the collecting unit 9. More specifically, the modeling unit 3 forms the powder layer 51. The powder layer 51 may be a flattened layer. Further, a layer obtained by applying the modeling liquid 60 to the powder layer 51 is formed as a modeling layer 61. The modeling layer 61 is a layered modeled object in which the first powder 50 is bonded together by applying the modeling liquid 60. The powder layer 51 and the modeling layer 61 are each a single layer.

Here, an example of an operation of the modeling unit 3 will be described with reference to FIG. 3. FIG. 3 is a diagram illustrating an example of a configuration of the modeling unit 3.

In the following description, an X direction, a Y direction, and a Z direction are directions perpendicular to each other. The X direction and the Y direction are horizontal directions, and the Z direction is a vertical direction. The X direction is an axial direction of a rotation axis of a flattening unit 31. The Y direction is a moving direction of the flattening unit 31 and is an arrangement direction of a supplying tank 11, the modeling tank 12, and the excess powder tank 15 in a powder tank 10. The Z direction is a direction in which a supplying stage 13 and a modeling stage 14 are raised and lowered. In the following description, for convenience of description, a Z positive direction side may be referred to as an upper side, and a Z negative direction side may be referred to as a lower side.

The modeling unit 3 includes the powder tank 10, a laminating unit 30, and an applying unit 40.

The powder tank 10 forms a powder layer 51 containing the first powder 50. The applying unit 40 applies the modeling liquid 60 to the powder layer 51 to form a modeling layer 61. In the modeling unit 3, a plurality of modeling layers 61 are laminated to shape a modeled object 62.

The powder tank 10 includes the supplying tank 11, a modeling tank 12, a supplying stage 13, a modeling stage 14, and an excess powder tank 15. The powder tank 10 has a box shape. Three upper surfaces of the supplying tank 11, the modeling tank 12, and the excess powder tank 15 are respectively opened.

The supplying tank 11 of the powder tank 10 is a tank for supplying the first powder 50 to the modeling tank 12. The supplying tank 11 holds the first powder 50 to be supplied to the modeling tank 12. The supplying stage 13 is provided at the bottom of the supplying tank 11. The supplying stage 13 is moved up and down in the vertical direction (Z direction). The side surface of the supplying stage 13 is disposed so as to be in contact with the inner side surface of the supplying tank 11.

The first powder 50 required for modeling is supplied from the supplying tank 11 to the modeling tank 12 of the powder tank 10. The powder layer 51 and the modeling layer 61 are formed in the modeling tank 12. Further, in a modeling tank 12, a plurality of modeling layer 61 are laminated to print the modeled object 62.

The supplying stage 13 and the modeling stage 14 are provided at the bottom of the supplying tank 11 and the bottom of the modeling tank 12, respectively, and are moved up and down in the vertical direction (Z direction). The side surface of the modeling stage 14 is disposed so as to be in contact with the inner side surface of the modeling tank 12. The upper surfaces of the supplying stage 13 and the modeling stage 14 are maintained horizontally.

The excess powder tank 15 of the powder tank 10 is a tank for holding the first powder 50 that becomes excess among the first powder 50 flattened by the flattening unit 31 when forming the powder layer 51. The bottom of the excess powder tank 15 may be provided with a unit of suctioning the first powder 50, or the excess powder tank 15 may be made removable. The excess powder tank 15 is disposed next to the modeling tank 12. The excess first powder 50 held in the excess powder tank 15 is collected by the collecting unit 9 by applying any of the above-described methods, and is resupplied as collected powder from the collecting unit 9 to the powder mixing unit 2.

The first powder 50 held in the supplying tank 11 is appropriately replenished by the powder mixing unit 2 supplying the mixed powder at a desired timing, for example, before the start of modeling by the modeling unit 3 or when the amount of the first powder 50 in the supplying tank 11 decreases. Although the powder tank 10 includes the supplying tank 11 and the modeling tank 12 in the above embodiment, the first powder 50 may be directly supplied from the powder mixing unit 2 to the modeling tank 12 without disposing the supplying tank 11.

As a method of conveying the first powder 50 from the powder mixing unit 2 to the supplying tank 11, a screw conveyor method using a screw, a pneumatic transportation method using air, or the like is used.

The powder tank 10 is formed by dividing an internal space of a single box into three spaces along the Y direction, such that the supplying tank 11, the modeling tank 12, and the excess powder tank 15 are formed. In addition, the powder tank 10 may be configured such that the supplying tank 11, the modeling tank 12, and the excess powder tank 15 are formed by using separate box bodies. In this case, it is preferable that the surfaces of the supplying tank 11 and the modeling tank 12 facing each other in the Y direction and the surfaces of the modeling tank 12 and the excess powder tank 15 facing each other in the Y direction are disposed to be in close contact with each other. This configuration can prevent the first powder 50 from leaking to the outside when the first powder 50 is moved between the tanks, and can move the first powder 50 more reliably. Further, the modeling tank 12 containing the object formed by the modeling unit 3 can be easily conveyed to the drying unit 4 and the powder removing unit 5.

The laminating unit 30 includes a flattening unit 31 and a powder removing unit 32.

The flattening unit 31 of the laminating unit 30 flattens the modeling layer 61 and the powder layer 51. The flattening unit 31 flattens the modeling layer 61 by rotating a recoater as a rotating body. The flattening unit 31 is rotationally driven to supply the first powder 50 on the supplying stage 13 of the supplying tank 11 to the modeling tank 12, thereby forming the powder layer 51. The flattening unit 31 reciprocates in the Y direction along the stage surface (the surface on which the first powder 50 is loaded) of the modeling stage 14. More specifically, the flattening unit 31 moves horizontally from the outside of the supplying tank 11 so as to pass over the supplying tank 11 and the modeling tank 12. Thus, the first powder 50 is transferred and supplied above the modeling tank 12, and the flattening unit 31 flattens the first powder 50 while passing over the modeling tank 12, thereby forming the powder layer 51. The flattening unit 31 is a member longer than the inner dimensions of the modeling tank 12 and the supplying tank 11. The flattening unit 31 may be a blade or a bar as a plate-like member.

The powder removing unit 32 of the laminating unit 30 removes the first powder 50 adhering to the flattening unit 31. The powder removing unit 32 moves together with the flattening unit 31 while being in contact with the circumferential surface of the flattening unit 31.

The applying unit 40 includes a carriage 41 and a head 42.

The head 42 applies the modeling liquid 60 to the powder layer 51. The head 42 is, for example, an inkjet head, and a nozzle row in which a plurality of nozzles are aligned is disposed in the head 42. A color modeled object may be formed by applying a cyan modeling liquid, a magenta modeling liquid, a yellow modeling liquid, and a black modeling liquid, or a modeling liquid of one color may be applied from each of a plurality of nozzles. The modeling liquid 60 may be applied by an inkjet method or a dispenser method.

At least one head 42 is mounted on the carriage 41, and is reciprocated in X (main scanning), Y (sub-scanning), and Z directions by a motor, a guide member, and the like.

The above description illustrates an example of the operation of the modeling unit 3.

Returning to FIG. 2, the three dimensional modeling apparatus 1 will be described.

The drying unit 4 dries the modeled object 62 formed by the modeling unit 3. Specifically, the drying unit 4 dries the solvent and the like contained in the modeling liquid 60 contained in the modeled object 62. In the drying unit 4, the modeling tank 12 containing the modeled object 62 shaped in the modeling unit 3 is heated and depressurized, and is then dried. As a result, the first powder 50 is fixed by the binder contained in the modeling liquid 60.

The powder removing unit 5 removes the excess powder 50 from the modeled object 62 dried by the drying unit 4. The powder removing unit 5 uses any method such as blowing air to blow off the powder. The powder removing unit 5 removes unfixed first powder 50 to which the modeling liquid 60 is not applied from the modeling tank 12. Thus, a three dimensionally modeled object in a state of being fixed by the binder, that is, a green body (G body) 63 is obtained in the powder removing unit 5. The first powder 50 removed by the powder removing unit 5 is collected by the collecting unit 9 as collected powder.

The filling unit 6 fills the internal cavity 81 of the green body 63 obtained by the powder removing unit 5 with the second powder 52. The filling unit 6 inserts, for example, a hollow tube or the like into the cavity 81 from the opening 82, and inserts the second powder 52 through the tube. Thus, the second powder 52 can be filled in the cavity 81. As a method of filling the second powder 52 into the cavity 81 in the filling unit 6, any method other than the above-described method may be applied.

The sintering unit 7 sinters the green body 63 to produce a final three dimensionally modeled object (S body) 64. The sintering unit 7 removes the binder from the green body 63 (degreasing), and sinters, for example, the green body 63 in a sintering furnace. In particular, in the present embodiment, the sintering unit 7 degreases and sinters the green body 63 in a state where the second powder 52 is filled in the internal cavity 81 of the green body 63 by the filling unit 6.

The removing unit 8 removes the remaining second powder 52 from the cavity 81 of the three dimensionally modeled object 64 after the degreasing and sintering treatments are performed by the sintering unit 7. The removing unit 8 can use any method such as blowing air to blow off the second powder 52.

The collecting unit 9 collects at least a part of the first powder 50 of the modeling unit 3 as collected powder. The collecting unit 9 collects the first powder 50 from the powder removing unit 5. The collecting unit 9 supplies the collected powder to the powder mixing unit 2.

The controller 100 controls the above-described operations of the respective units of the three dimensional modeling apparatus 1.

FIG. 4 is a hardware configuration diagram illustrating the controller 100. As illustrated in FIG. 4, the controller 100 of the three dimensional modeling apparatus 1 includes a central processing unit (CPU 101), a read only memory (ROM 102) that stores a program for executing control and other fixed data, and a random access memory (RAM 103) that temporarily stores modeling data and the like. The controller 100 of the three dimensional modeling apparatus 1 also receives modeling data from a modeling data generation apparatus 104 such as an external computer. The modeling data generation apparatus 104 produces modeling data obtained by slicing the final form of the three dimensionally modeled object 64 into the modeling layers 61. The controller 100 performs the modeling operation for each modeling layer 61. The modeling data generation apparatus 104 may be provided separately from or integrally with the three dimensional modeling apparatus 1. The controller 100 may be provided inside the three dimensional modeling apparatus 1 or outside the three dimensional modeling apparatus 1.

### <Three dimensional modeling Method>

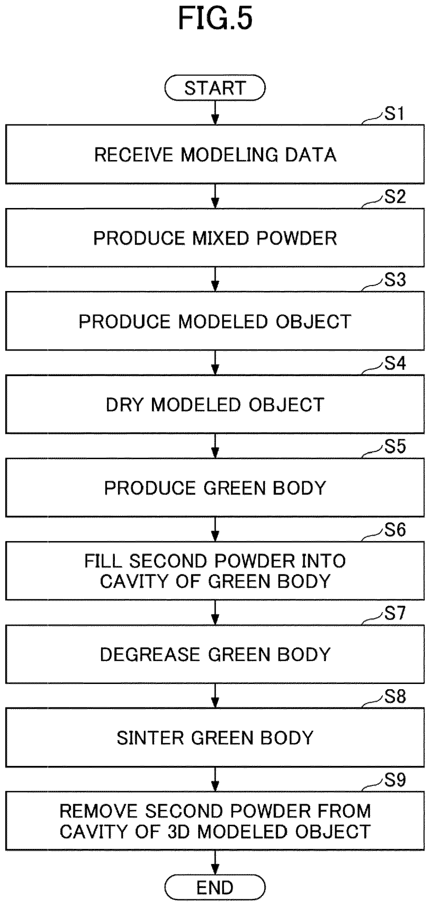

FIG. 5 is a flowchart illustrating a three dimensional modeling method according to an embodiment of the present invention. The flowchart illustrated in FIG. 5 illustrates a flow of a series of modeling operations of the three dimensionally modeled object 64 performed by the three dimensional modeling apparatus 1 according to the present embodiment.

In step S1, the controller 100 receives the modeling data from the modeling data generation apparatus 104. The controller 100 outputs a control instruction based on the modeling data to each element of the three dimensional modeling apparatus 1 .

In step S2, the powder mixing unit 2 mixes new powder and the collected powder at a predetermined mixing ratio based on the control instruction input from the controller 100 in step S1 to produce mixed powder. The mixed powder mixed in the powder mixing unit 2 is supplied to the modeling unit 3 and used as the first powder 50 for modeling the modeled object 62. The first powder 50 may be only new powder or only collected powder without being mixed powder.

In step S3, the modeled object 62 is produced by the modeling unit 3 using the first powder 50 supplied from the powder mixing unit 2 in step S1, based on the control instruction input from the controller 100 in step S2 (modeling step). The modeling step includes a step of forming a powder layer 51 with the first powder 50 and a step of applying the modeling liquid 60 to the powder layer 51. In particular, in the present embodiment, the modeling unit 3 models the modeled object 62 having the cavity 81 inside and the opening 82 connected from the cavity 81 to the outside, using the first powder 50. The modeling tank 12 in which the modeled object 62 is accommodated is conveyed from the modeling unit 3 to the drying unit 4. The excess powder that has overflowed from the modeling tank 12 in the modeling unit 3 is collected by the collecting unit 9 and supplied to the powder mixing unit 2.

In step S4, the drying unit 4 dries the modeled object 62 formed in step S3. The drying unit 4 dries the modeled object at a drying temperature and for a drying time according to a control instruction from the controller 100. The modeling tank 12 in which the dried modeled object 62 is accommodated is conveyed from the drying unit 4 to the powder removing unit 5.

In step S5, the powder removing unit 5 removes the excess powder 50 (excess powder) from the modeled object 62 dried in step S4, and the green body 63 is thus produced (powder removing step). The green body 63 from which the excess powder has been removed is conveyed from the powder removing unit 5 to the filling unit 6. The removed excess powder is collected by the collecting unit 9 and supplied to the powder mixing part 2.

In step S6, the filling unit 6 fills the cavity 81 of the green body 63 formed in step S5 with the second powder 52 via the opening 82 (filling step). For example, the filling unit 6 inserts a hollow tube or the like into the cavity 81 from the opening 82, and inserts the second powder 52 through the tube. Thus, the second powder 52 can be filled in the cavity 81. In the filling step S6, an operator may manually fill the cavity 81 with the second powder 52 instead of using the filling unit 6. The green body 63 filled with the second powder 52 is conveyed from the filling unit 6 to the sintering unit 7.

In step S7, the green body 63 filled with the second powder 52 in step S6 is degreased (degreasing treatment) by the sintering unit 7 (degreasing step). By this treatment, the binder component of the modeling liquid 60 is removed from the green body 63.

In the degreasing step S7, the green body 63 is degreased using, for example, a degreasing apparatus included in the sintering unit 7. Specifically, when the green body 63 is heated at a temperature equal to or higher than the thermal decomposition temperature of the resin, the resin contained in the green body 63 is degreased. As the details of the degreasing step, for example, the resin component containing an acrylic material is decomposed at a temperature higher than the thermal decomposition temperature thereof and lower than the melting points or solidus temperatures of the pure aluminum and the aluminum alloy materials. Depending on the resin component contained in the green body 63, a plurality of temperatures for heating and holding can be set. Alternatively, a degreasing method by solvent extraction may be applied in which the green body 63 is immersed in a solvent to extract the resin, instead of heating.

In step S8, the green body 63, which has been subjected to the degreasing treatment in step S7 after the cavity 81 has been filled with the second powder 52 in step S6, is subjected to the sintering treatment by the sintering unit 7 (sintering step). During the sintering step, for example, during a period from the start of sintering to the end of sintering, a part of the second powder 52 is discharged from the cavity 81 through the opening 82. The green body 63 is sintered by the sintering step to produce the three dimensionally modeled object 64. The three dimensionally modeled object 64 in which the second powder 52 is filled in the cavity 81 after the sintering treatment is transported from the sintering unit 7 to the removing unit 8.

In the sintering step S8, the degreased green body 63 is sintered using, for example, a sinter apparatus included in the sintering unit 7. Specifically, the green body 63 is heated at a temperature higher than that in the degreasing step, and thus the three dimensionally modeled object 64 (sintered body of the green body) in which pure aluminum or an aluminum alloy material is integrated is obtained. Here, the aluminum alloy material includes Al-Cu, Al-Mn, Al-Mg, Al-Si, Al-Si-Mg, Al-Si-Cu, Al-Zn-Mg, Al-Li based alloys, or alloy materials similar to these materials.

As the details of the sintering step, the degreased green body 63 is heated to a temperature between the aluminum liquidus line and the solidus line at 1°C/h (hour) to 200°C/h, and then the temperature is held for about 1 to 10 hours. More specifically, the maximum temperature is preferably a temperature at which 10 to 50% of the aluminum liquid phase is generated. The temperature rising rate may be changed in the middle. The degreasing step and the sintering step are performed in an atmosphere of vacuum, Ar, H₂, N₂, or the like. After heating, the inside of the apparatus is cooled, and the sintered body is taken out.

For example, when the green body 63 containing AlSi10Mg and an acryl resin is degreased, the green body 63 is heated at a temperature equal to or higher than the decomposition temperature of the acryl resin and equal to or lower than the solidus temperature (about 570°C) of AlSi10Mg. Further, in the case of sintering, the green body 63 is heated at a temperature of the solidus temperature (about 570°C) or more and the liquidus temperature (about 600°C) or less for 1 to 10 hours.

The degreasing step S7 and the sintering step S8 may be continuously performed using the unified degreasing-sintering apparatus as the sintering unit 7 of the present embodiment, or may be performed using a degreasing apparatus and a sintering apparatus separately.

In step S9, the removing unit 8 removes the second powder 52 from the cavity 81 of the three dimensionally modeled object 64 which has been subject to the sintering treatment in step S8 (removing step). The removing unit 8 can remove the second powder 52 from the cavity 81 by using any desired method such as blowing air to blow off the second powder 52. In the removing step S9, the operator may manually remove the second powder 52 from the cavity 81 instead of the removing unit 8. In the removing step, it is preferable to remove other holders such as a green body setter, a ceramic block setter, and a ceramic powder setter outside the modeled object. When the removing step S9 is completed, the control flow is terminated.

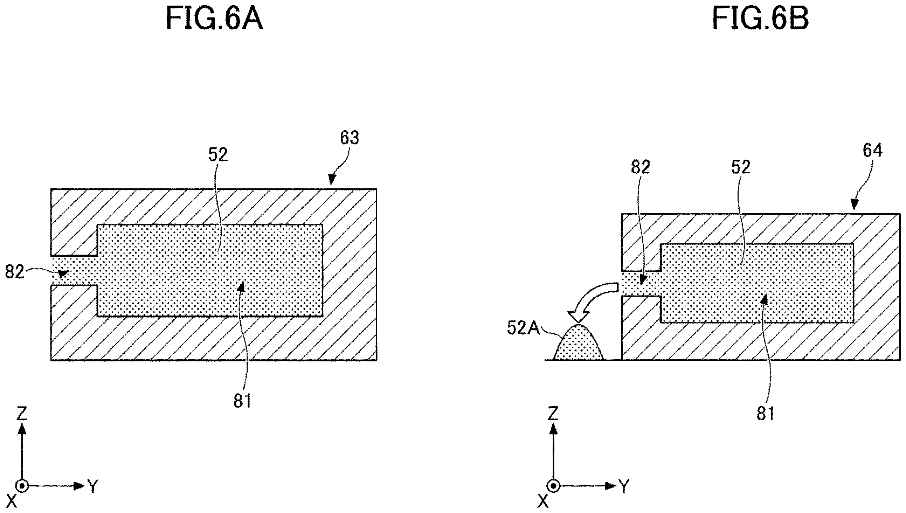

FIGS. 6A and 6B are schematic diagrams illustrating a first example of a structure of the modeled object. FIG. 6A is a cross-sectional diagram illustrating the modeled object, and FIG. 6B is a diagram schematically illustrating the discharge of a part 52A of the second powder from the cavity 81 through the opening 82. The modeled object is provided with an internal cavity 81 and a single opening 82 that connects the cavity 81 and the outside of the modeled object. The cavity 81 is filled with the second powder 52.

As illustrated in FIG. 6A, the green body 63 is sintered by the sintering unit 7 in a state where the second powder 52 is filled in the cavity 81 via the opening 82. When the sintering is finished, a three dimensionally modeled object 64 is produced as illustrated in FIG. 6B. During sintering, the volume of the internal cavity 81 is also reduced in accordance with the shrinkage of the outer shape of the green body 63. Therefore, the amount of the second powder 52 that can be filled in the cavity 81 also changes with the shrinkage. In particular, in the present embodiment, the part 52A of the second powder that cannot be accommodated in the cavity 81 is discharged from the opening 82 to the outside of the green body 63 in accordance with the shrinkage of the cavity 81 of the green body 63. This may reduce shrinkage of the outer shape of the green body 63 and improve the modeling quality.

The diameter of the opening 82 is smaller than that of the cavity 81. The opening 82 is provided on the side surface of the green body 63. Further, the opening 82 is provided at an end portion of the cavity 81 in the longitudinal direction. For example, the cavity 81 is formed so that the Y direction is the longitudinal direction. The opening 82 is formed at the end portion of the cavity 81 on the negative Y direction side. Since the opening 82 is formed on the longitudinal direction side where the degree of shrinkage of the cavity 81 is large, the second powder 52 is easily discharged from the opening 82 to the outside.

Here, advantages of filling the second powder 52 into the cavity 81 inside the modeled object 62 will be described. The green body 63 degreased in the degreasing step becomes very fragile, and the green body 63 may collapse due to a predetermined stress. Further, since the green body 63 during sintering is very fragile, the green body 63 may be susceptible to deformation, breakage, or the like.

In particular, this problem is significant when the modeled object 62 has a shape having the cavity 81 therein. Therefore, in the three dimensional modeling apparatus 1 according to the present embodiment, when the three dimensionally modeled object 64 having the cavity 81 therein is formed, the cavity 81 in the green body 63 is filled with the second powder 52 in the filling step. This may improve the strength of the green body 63 in the sintering step, and prevent deformation or breakage of the green body 63.

However, the green body 63 is densified and shrunk during the sintering step, whereas the second powder 52 is not shrunk. Therefore, when the entire second powder 52 remains in the cavity 81 of the green body 63 from the start to the end of the sintering step, the cavity 81 may expand to deform the green body 63.

Therefore, in the present embodiment, the opening 82 from which the second powder 52 is discharged is provided in the modeled object 62. In particular, the opening 82 that connects the cavity 81 inside the modeled object 62 to the outside is provided in advance by the modeling unit 3. Thus, when the green body 63 shrinks during the sintering step, the second powder 52 flows in accordance with the shrinkage of the green body 63, and the part 52A of the second powder 52 is discharged from the opening 82. This may prevent deformation or breakage of the green body 63 by the effect of the second powder 52 filled in the cavity 81.

The second powder 52 preferably has a higher melting point than the first powder 50. When aluminum or aluminum alloys are used as the first powder 50, it is preferable to use ceramic as the second powder 52, and it is particularly preferable to use alumina (melting temperature: 2072°C) or zirconia (melting temperature: 2715°C).

The second powder 52 filled in the cavity 81 is required to have fluidity because such second powder is required to be discharged from the cavity 81 to the outside of the green body 63 through the opening 82. As an index representing the fluidity, sphericity, particle size distribution, angle of repose, and the like are given.

In addition, since it is preferable that the second powder 52 fills the cavity 81 as closely as possible without clearance, the smaller the particle diameter, the better. The above are the characteristics required for the second powder 52 in the present embodiment.

The cavity 81 may have any shape to suit a component to be fabricated. For example, when the three dimensionally modeled object 64 is a heat sink, the cavity 81 constitutes a flow path inside the heat sink. As the volume of the cavity 81 is smaller, the amount of the second powder 52 is smaller due to the shrinkage of the green body 63, and thus it is possible to prevent the occurrence of deformation or breakage. The larger the cross-sectional area of the opening 82, the better. Since the opening 82 shrinks in shape in the sintering step, the diameter of the opening 82 preferably has a size that can be maintained even after the shrinkage.

When the three dimensionally modeled object 64 is a heat sink, an inlet and an outlet of the heat sink for the fluid can be used as the opening 82. In this case, the opening 82 preferably has a circular shape that is easy to process for connecting components. The diameter of the opening 82 may, for example, preferably be about 12mm. In this way, when the opening 82 can be used as both the inlet and the outlet for the fluid, it is not necessary to add a relief hole to the modeling data, and thus it is possible to improve modeling efficiency.

The three dimensional modeling method according to the present embodiment is a method for fabricating the modeled object 62 having the cavity 81 therein. The method includes a modeling step S3 of modeling the modeled object 62 with the first powder 50, the modeled object 62 including the opening 82 connecting the cavity 81 and the outside of the modeled object 62, a filling step S6 of filling the cavity 81 with the second powder 52 from the opening 82 of a green body 63 resulting from the modeled object 62 modeled in the modeling step S3, a sintering step S8 of sintering the green body 63 in which the cavity 81 is filled with the second powder 52 in the filling step S6, and a removing step S9 of removing the second powder 52 in the cavity 81 from the opening 82. The melting temperature of the second powder 52 is higher than the sintering temperature in the sintering step S8.

With this configuration, after the second powder 52 is filled into the cavity 81 of the modeled object 62 (green body 63) in the filling step S6, the modeled object 62 (green body 63) is sintered in the sintering step S8. Therefore, even when the green body 63 shrinks during the sintering step and stresses to deform the cavity 81 are generated, the deformation can be prevented by the second powder 52 filled into the cavity 81. Further, the cavity 81 also shrinks as the green body 63 shrinks during the sintering step. Therefore, when there is no escape route for the second powder 52 filled in the cavity 81, the inner wall of the cavity 81 is pressed toward the outer side by the second powder 52 inside the cavity along with the shrinkage of the cavity 81, and thus the green body 63 may be deformed so as to be curved toward the outside. In contrast, in the present embodiment, the part 52A of the second powder 52 is discharged to the outside of the green body 63 through the opening 82 in accordance with the shrinkage of the cavity 81. Thus, even when the green body 63 and the cavity 81 shrink during the sintering step, the state in which the cavity 81 is filled with an appropriate amount of the second powder 52 can be maintained, and therefore, deformation and breakage of the green body 63 can be prevented.

The opening 82 is not restricted in shape as long as the part 52A of the second powder 52 is discharged. Therefore, according to the three dimensional modeling method of the present embodiment, the modeling quality can be improved.

The three dimensional modeling apparatus 1 according to the present embodiment includes the modeling unit 3 that performs the modeling step, the filling unit 6 that performs the filling step S6, the sintering unit 7 that performs the sintering step S8, and the removing unit 8 that performs the removing step S9. Therefore, the three dimensional modeling apparatus 1 can achieve the same effect as the three dimensional modeling method according to the present embodiment.

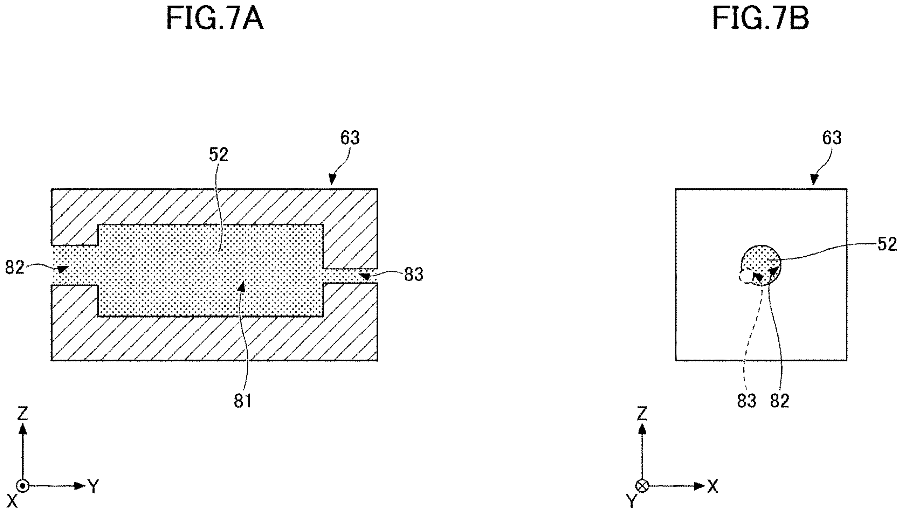

Next, a configuration in which a plurality of through holes are provided will be described with reference to FIGS. 7A to 9.

FIGS. 7A and 7B are schematic diagrams illustrating a second example of a structure of the modeled object. In FIGS. 7A and 7B, two openings 82 and 83 are provided as a plurality of through holes in contrast to FIGS. 6A and 6B. This configuration allows the pressure on the second powder 52 to be dispersed when the green body 63 shrinks. FIG. 7A is a cross-sectional diagram in the YZ axis direction, and FIG. 7B is a side diagram as viewed from the Y negative direction side.

As illustrated in FIG. 7A, the opening 83 is smaller than the opening 82. The opening 82 and the opening 83 face each other with the cavity 81 interposed therebetween. As illustrated in FIG. 7B, the cross-sectional shape of each of the openings 82 and 83 is a perfect circle, and the circular shape of the opening 83 is smaller than the circular shape of the opening 82. The cross-sectional shape of the openings 82 and 83 may be a perfect circle, an ellipse, a polygon, or the like. The opening 82 is on an axis extending from a portion of the opening 83. The positions of the opening 82 as a first opening and the opening 83 as a second opening are preferably at positions where a part of or the whole of the second opening 83 overlaps with the first opening 82 when the second opening 83 is projected along the axial direction of the first opening 82. For example, the opening 83 partially overlaps with the projection of the opening 82. This allows the second powder 52 to be discharged from a pair of directions on the same axis (Y direction in FIGS. 7A and 7B).

Further, for example, when the cavity 81 has a bilaterally symmetrical shape, the opening 82 and the opening 83 preferably have the same shape and the same diameter, and are preferably coaxial. When the cavity 81 is not bilaterally symmetrical, the shapes and the diameters of the openings 82 and 83 are preferably adjusted in accordance with the shape of the cavity 81. By making the shapes and diameters the same or adjusting them, the amount and speed of the second powder 52 to be discharged can be made uniform.

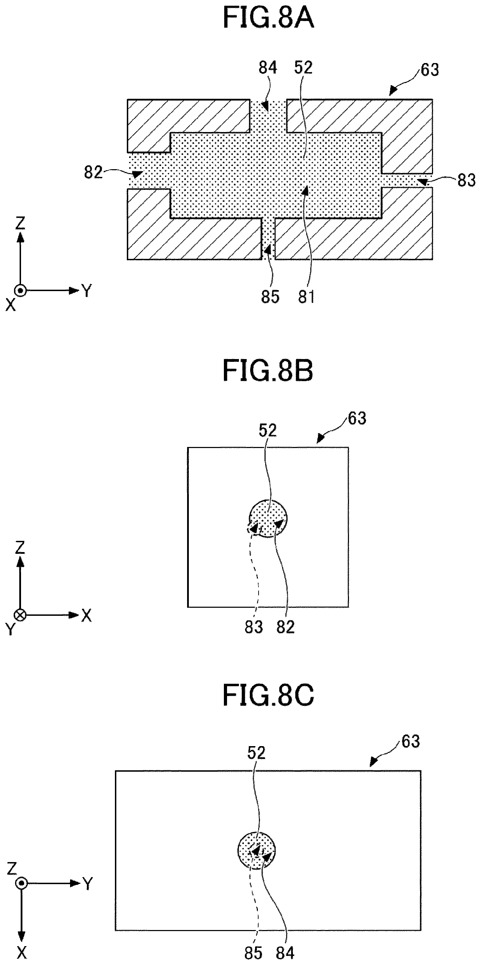

FIG. 8A to 8C are schematic diagrams illustrating a third example of a structure of the modeled object. FIG. 8A is a cross-sectional diagram in the YZ axis direction, FIG. 8B is a side diagram viewed from the Y negative direction side, and FIG. 8C is a plan diagram viewed from the Z positive direction side.

In FIG. 8A, four openings 82, 83, 84, and 85 are provided as a plurality of through holes, in contrast to FIGS. 6A to 7B. Two openings 82 and 83 forming a first pair of the four openings are disposed to face each other, and two openings 84 and 85 forming a second pair of the four openings are disposed to face each other.

As illustrated in FIG. 8B, in the two openings 82 and 83 as first and second openings forming the first pair, when the second opening 83 is projected along the axial direction of the first opening 82, a part of or the whole of the second opening 83 overlaps the first opening 82. As illustrated in FIG. 8C, the opening 85 is smaller than the opening 84. The openings 84 and 85 face each other via the cavity 81. As illustrated in FIG. 8A, the opening 84 is on an axis extending from a portion of the opening 85. In addition, in the two openings 84 and 85 as first and second openings forming the second pair, when the second opening 85 is projected along the axial direction of the first opening 84, a part of or the whole of the second opening 85 overlaps the first opening 84.

In FIGS. 8A to 8C, two pairs of through holes are provided as four through holes, but the number of openings may be an even number, for example, six or eight. That is, in each of the plurality of pairs of openings, each pair including first and second openings, when the second opening is projected along the axial direction of the first opening, a part of or the whole of the second opening may overlap the first opening.

With this configuration, in the sintering step, the second powder 52 can be discharged from a plurality of directions.

Further, it is preferable that a straight line connecting the centers of the two openings 82 and 83 forming the first opening pair and a straight line connecting the centers of the two openings 84 and 85 forming the second opening pair are orthogonal to each other. With this configuration, in the sintering step S8, the second powder 52 can be easily released in many shrinkage directions of the green body 63.

Note that, although FIGS. 8A to 8C illustrate a configuration in which the four through holes, that is, the two pairs of openings are disposed to face in the Y direction (the longitudinal direction of the cavity 81) and the Z direction (the lateral direction of the cavity 81), another pair of openings may be disposed to face in the X direction.

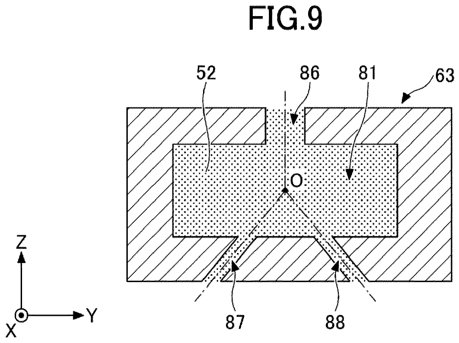

FIG. 9 is a schematic diagram illustrating a fourth example of a structure of the modeled object. FIG. 9 is a cross-sectional diagram in the YZ axis direction. In FIG. 9, three openings 86, 87, and 88 may be disposed as a plurality of through holes in FIGS. 6A to 8C. Although FIG. 9 illustrates a configuration in which three openings are disposed, the number of openings may be an odd number, for example, five or seven.

Each of the openings 86, 87, 88 is disposed at a position equidistant from the center O of the cavity 81. With this configuration, the amount of the second powder 52 that escapes from the openings as the green body 63 shrinks can be made uniform.

As described above, since the plurality of openings can prevent concentration of stress on one place of the cavity 81 when the second powder 52 is about to escape at the time of shrinkage in the sintering step, the second powder 52 can be easily released, and the shrinkage of the green body 63 can be made more uniform.

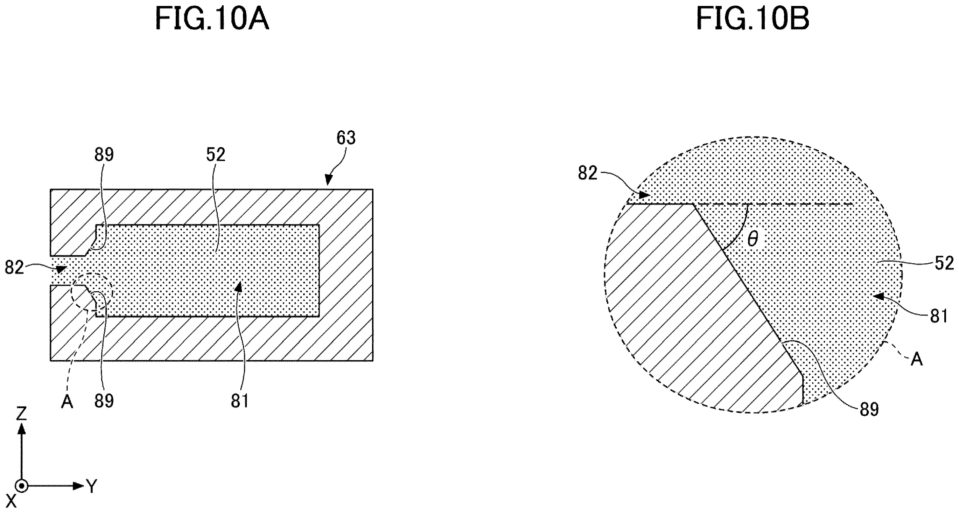

Next, a configuration in which a taper is provided will be described with reference to FIGS. 10A to 11.

FIGS. 10A and 10B are schematic diagrams illustrating a fifth example of a structure of the modeled object. FIG. 10A is a cross-sectional diagram in the YZ axis direction, and FIG. 10B is an enlarged diagram illustrating a portion of a dotted circle A in FIG. 10A. In FIGS. 10A and 10B, a taper 89 is provided at an end portion of the opening 82 on the cavity 81 side, as compared with FIGS. 6A and 6B.

By providing the taper 89, blockage of the second powder 52 is alleviated, and the discharge is promoted.

FIG. 10B illustrates an angle θ as the inclination angle of the taper 89. The angle θ is set at a predetermined angle from a horizontal line extending from the axial direction of the opening 82. The dimension of the taper 89 is preferably large, and the taper 89 may be continuous from the cavity 81 to the surface of the green body 63 at the maximum.

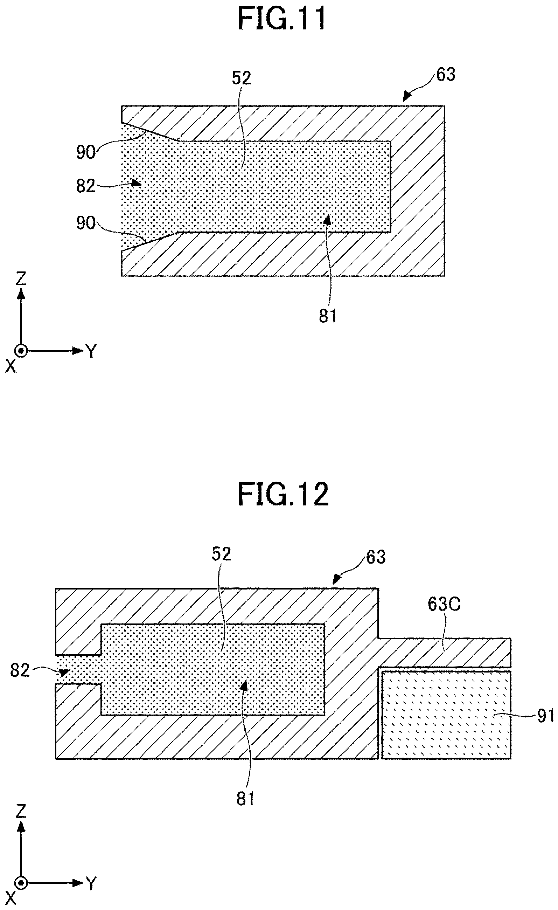

FIG. 11 is a schematic diagram illustrating a sixth example of a structure of the modeled object. FIG. 11 is a cross-sectional diagram in the YZ axis direction. As illustrated in FIG. 11, an outer end portion of the opening 82 is preferably provided with a taper 90. In this case, the opening 82 is formed to widen from the inside to the outside of the cavity 81 by the taper 90. That is, the cross-sectional area of the opening 82 increases from the inside to the outside of the cavity 81.

With this configuration, the resistance between the second powder 52 and the wall surface of the green body 63 is reduced, and thus the second powder 52 can be easily discharged. In addition, the second powder 52 can be easily filled in the cavity 81.

By providing the tapers 89 and 90, the second powder 52 does not remain in the sintering step S8 and can be easily discharged.

FIG. 12 is a schematic diagram illustrating a seventh example of a structure of the modeled object. FIG. 12 is a cross-sectional diagram in the YZ axis direction. In the example of FIG. 12, the green body 63 has a shape having a protruding portion 63C that partially protrudes in the Y direction (horizontal direction) from the outer wall of the green body 63 in the installation posture for the degreasing and sintering treatments. In the case of such a shape, the method of filling the cavity 81 with the second powder 52 as in the above examples does not act on the protruding portion 63C in the degreasing and sintering treatments, and thus the protruding portion 63C may be susceptible to deformation or breakage.

Therefore, as illustrated in FIG. 12, a retainer 91 may be used below the protruding portion 63C. Thus, the posture of the protruding portion 63C can be maintained by the retainer 91, and therefore, deformation or breakage of the protruding portion 63C can be prevented in the degreasing step S7 or the sintering step S8, and the effect of preventing the deformation or breakage of the entire green body 63 can be further improved.

In the degreasing step S7 and the sintering step S8, the protruding portion 63C also shrinks similarly to the green body 63, and thus a situation in which the position of the protruding portion 63C in the Z direction varies may be considered. In consideration of this point, the retainer 91 is preferably made of the first powder 50 of the same material as the modeled object 62. Thus, the retainer 91 shrinks during the degreasing and sintering steps as in the protruding portion 63C and the green body 63, and therefore, the relative positional relationship between the retainer 91 and the protruding portion 63C can be maintained, and the posture of the protruding portion 63C can be continuously maintained by the retainer 91. Further, a contact surface (upper surface in the example of FIG. 12) of the retainer 91 with the protruding portion 63C is preferably made of the same material as the second powder 52 so as not to melt and fuse with the protruding portion 63C at the sintering temperature.

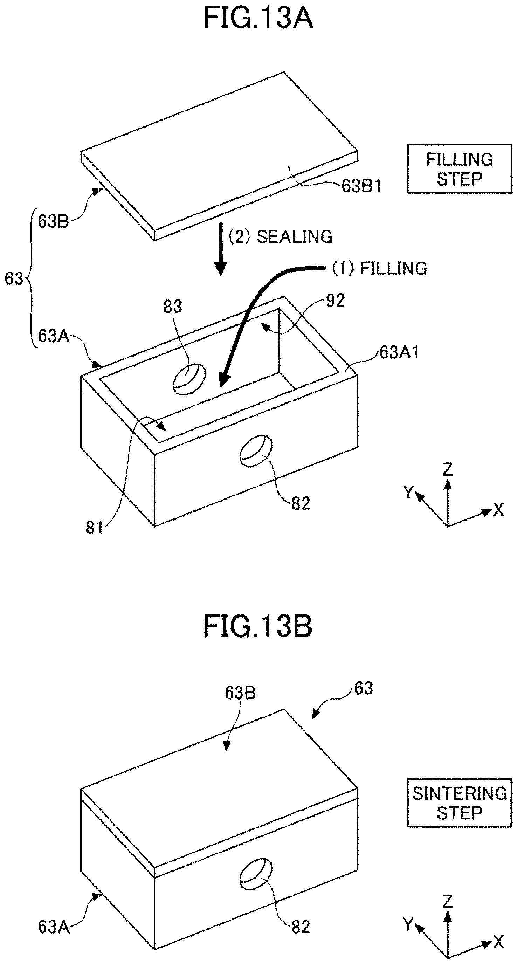

Next, a configuration in which a sealing member 63B is provided in the modeled object will be described with reference to FIGS. 13A to 19. In the following description, the second example of the structure of the modeled object illustrated in FIGS. 7A and 7B, that is, the modeled object in which the two openings 82 and 83 are disposed as the plurality of through holes will be described, but the structure of the modeled object other than the second example may be applied.

FIGS. 13A and 13B are schematic diagrams illustrating an eighth example of a structure of the modeled object. As illustrated in FIGS. 13A and 13B, the modeled object (green body 63) of the eighth example includes a main body 63A and a sealing member 63B which is a separate body from the main body 63A. The main body 63A is provided with a filling opening 92 differing from the openings 82 and 83. The sealing member 63B can seal the filling opening 92.

Both the main body 63A and the sealing member 63B side are made of the first powder 50. For example, the main body 63A and the sealing member 63B can be formed as a part of the modeled object 62 in the modeling step S3, and can be formed as a part of the green body 63 through the drying step S4 and the powder removing step S5.

As illustrated in FIG. 13A, in the filling step S6, as a first stage, the second powder 52 is filled into the cavity 81 inside the main body 63A of the green body 63 from the filling opening 92. The filling opening 92 is formed to have a larger opening area than the openings 82 and 83. As exemplified in the present embodiment, when both the outer shape of the main body 63A of the modeled object and the spatial shape of the cavity 81 are rectangular parallelepiped shapes, it is preferable that the entirety of any one of four surfaces except for a pair of facing surfaces on which the openings 82 and 83 are disposed among six surfaces of the rectangular parallelepiped shape of the main body 63A is formed to be opened, and the opening is used as the filling opening 92. In the example of FIGS. 13A and 13B, the filling opening 92 is formed on a surface facing the Z positive direction side among the six surfaces of the main body 63A, and the shape of the filling opening 92 is formed in a rectangular shape along the inner circumferential surface of the cavity 81 when viewed in the Z direction. By providing the filling opening 92 in this manner, the second powder 52 can be filled into the cavity 81 in a shorter time in the filling step than in the case of filling the second powder 52 via the openings 82 and 83, and therefore, the filling operation can be performed more easily.

As illustrated in FIG. 13A, in the filling step S6, as a second stage, the filling opening 92 is sealed by the sealing member 63B after the second powder 52 is filled into the cavity 81. The sealing member 63B has a plane 63B1 that can make surface contact with an end surface 63A1 of the main body 63A on which the filling opening 92 is provided. The shape of the plane 63B1 is preferably formed so as to extend at least outward from the outer edge of the filling opening 92. In the example of FIG. 13, the shape of the plane 63B1 of the sealing member 63B is a rectangular shape identical to the shape of the surface facing the Z positive direction side on which the filling opening 92 is provided (the outer edge shape of the end surface 63A1) among the six surfaces of the rectangular parallelepiped shape of the main body 63A. In the example of FIGS. 13A and 13B, the sealing member 63B is a flat plate member in which a pair of main surfaces face the Z direction and one main surface facing the Z negative direction side is the plane 63B1. The outer edge shape of the sealing member 63B as viewed in the Z direction is formed to be the same shape as the outer edge shape of the main body 63A. By forming the sealing member 63B in this manner, the entire filling opening 92 can be completely blocked by the sealing member 63B. Therefore, even in the structure in which the filling opening 92 is provided separately from the opening 82 or 83, the second powder 52 filled in the cavity 81 in the step S8 can be discharged from the opening 82 or 83, as in the first to seventh examples described above.

As illustrated in FIG. 13B, when the sintering step S8 is performed in a state where the filling opening 92 of the main body 63A is sealed by the sealing member 63B formed as described above, the sealing member 63B is bonded to the outer edge portion of the filling opening 92, and the three dimensionally modeled object 64 integrated with the main body 63A is formed. In this case, in the example of FIGS. 13A and 13B, since the outer edge shape of the sealing member 63B as viewed in the Z direction is formed to be the same shape as the outer edge shape of the main body 63A, a joining portion between the main body 63A and the sealing member 63B can be made flush, and an integral structure without a sense of discomfort can be obtained.

In the structure in which the filling opening 92 and the sealing member 63B are provided as illustrated in FIGS. 13A and 13B, it is preferable that the excess powder 50 in the cavity 81 is removed through the filling opening 92 in the powder removing step S5. Thus, the excess powder 50 in the cavity 81 can be removed through the filling opening 92 having a larger opening area than the openings 82 and 83, and therefore, the excess powder 50 can be removed from the cavity 81 in a shorter time in the powder removing step, and the powder removing operation can be performed more easily in addition to the filling step.

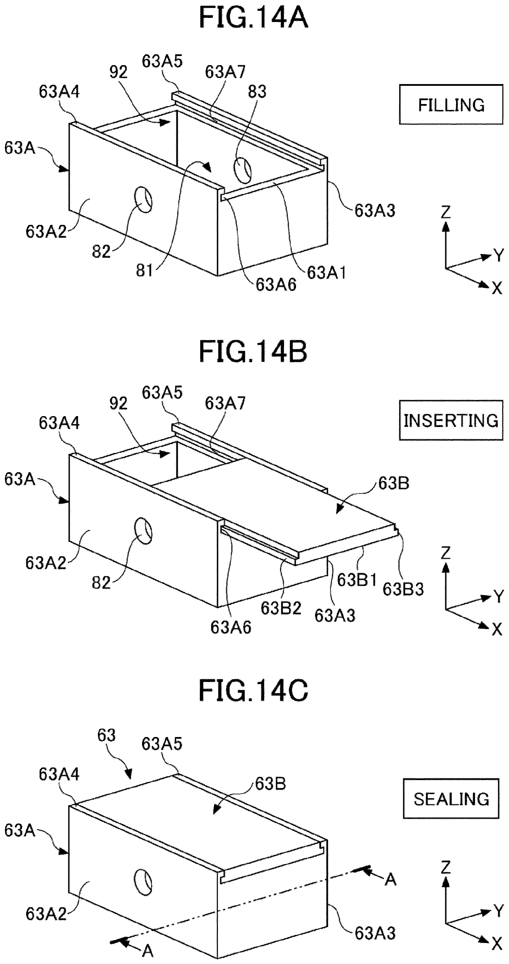

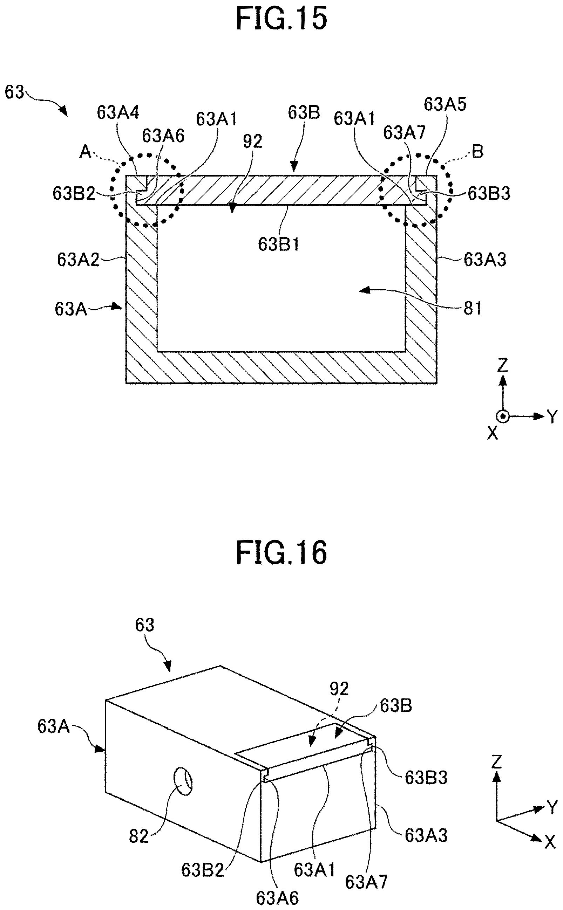

FIGS. 14A to 14C are schematic diagrams illustrating a ninth example of a structure of the modeled object. FIG. 15 is a cross-sectional diagram taken along line A-A in FIG. 14C. As illustrated in FIGS. 14A to 15, in the modeled object (green body 63) of the ninth example, a structure for preventing the sealing member 63B from coming off is provided in the eighth example of FIGS. 13A and 13B.

As illustrated in FIGS. 14A to 15, in the ninth example, a pair of standing portions 63A4 and 63A5 are provided to stand on the Z positive direction side from the end surface 63A1 of the main body 63A where the filling opening 92 is provided. The pair of standing portions 63A4 and 63A5 are provided in portions corresponding to a pair of opposite sides among four sides of the rectangular shape of the end surface 63A1, and in the example of FIGS. 14A to 14C, the pair of standing portions 63A2 and 63A3 are provided to extend in the X direction along the side surfaces SL and SL on which the openings 82 and 83 are provided, respectively. On the other hand, the sealing member 63B is formed to have a width dimension in the Y direction so as to be fitted between the pair of standing portions 63A4 and 63A5.

In the pair of standing portions 63A4 and 63A5, grooves 63A6 and 63A7 are provided along the extending direction of the standing portions 63A4 and 63A5 on the facing surfaces on the center side of the main body 63A facing each other. On the other hand, the sealing member 63B is provided with streaks 63B2 and 63B3 along the longitudinal direction of the side surface on the side surface facing the facing surface. The streaks 63B2 and 63B3 are formed so as to be fitted to the grooves 63A6 and 63A7, respectively. The grooves 63A6 and 63A7 are provided to the end portions of the standing portions 63A4 and 63A5 in the X direction, and thus, the streaks 63B2 and 63B3 are provided so as to be fitted from the X direction.

As illustrated in FIG. 14A, in the filling step S6, as a first stage, the second powder 52 is filled into the cavity 81 inside the main body 63A of the green body 63 from the filling opening 92.

As illustrated in FIG. 14B, in the filling step S6, as a second stage, after the second powder 52 is filled into the cavity 81, the streaks 63B2 and 63B3 of the sealing member 63B are fitted into the grooves 63A6 and 63A7 of the main body 63A from, for example, the X positive direction side. As a result, the sealing member 63B is slid in the negative X direction while gradually closing the filling opening 92 between the pair of the standing portions 63A4 and 63A5 of the main body 63A.

As illustrated in FIG. 14C, in the filling step S6, as a third stage, the sealing member 63B is further slid to the X negative direction side, and reaches the end portion of the main body 63A on the X negative direction side, and finally, the filling opening 92 is sealed by the sealing member 63B.

As illustrated in FIG. 15, in a state where the filling opening 92 is sealed by the sealing member 63B, the streaks 63B2 and 63B3 of the sealing member 63B are fitted to the grooves 63A6 and 63A7 of the main body 63A, and thus it is possible to prevent the sealing member 63B from moving in the Z positive direction relative to the main body 63A. That is, the portions indicated by dotted circles A and B in FIG. 15, that is, the portion A where the streak 63B2 is fitted into the groove 63A6 and the portion B where the streak 63B3 is fitted into the groove 63A7 at both ends of the sealing member 63B in the Y direction function as a structure for preventing the sealing member 63B from coming off.

By providing the structure for preventing the sealing member 63B from coming off, it is possible to prevent the second powder 52 filled in the cavity 81 from leaking through the contact surface between the main body 63A and the sealing member 63B when the green body 63 shrinks in the sintering step S8. This can prevent the second powder 52 from being interposed in the gaps between the main body 63A and the sealing member 63B during the sintering step, and can reduce the effect of the second powder 52 on the bonding between the main body 63A and the sealing member 63B. As a result, the main body 63A and the sealing member 63B can be more reliably bonded to each other in the sintering step.

The structure for preventing the sealing member 63B from coming off illustrated in FIGS. 14A to 15 is an example, and another structure may be used as long as the structure has a shape that can be modeled in the modeling step. As other retaining structures, for example, a structure such as light press-fitting or screw fastening is exemplified.

FIG. 16 is a schematic diagram illustrating a tenth example of a structure of the modeled object. As illustrated in FIG. 16, in the modeled object of the tenth example, the sealing member 63B is provided so as to be a part of one surface of the main body 63A instead of the entire surface, in contrast to the ninth example of FIGS. 14A to 15.

In the example of FIG. 16, the structure for preventing the sealing member 63B and the main body 63A from coming off is the same as that of the ninth example, but the dimension of the sealing member 63B in the X direction is shorter than the dimension of the surface of the main body 63A in the X direction on which the filling opening 92 is provided.

In the tenth example, since the same retaining structure as that of the ninth example is provided, the same effect as that of the ninth example can be achieved.

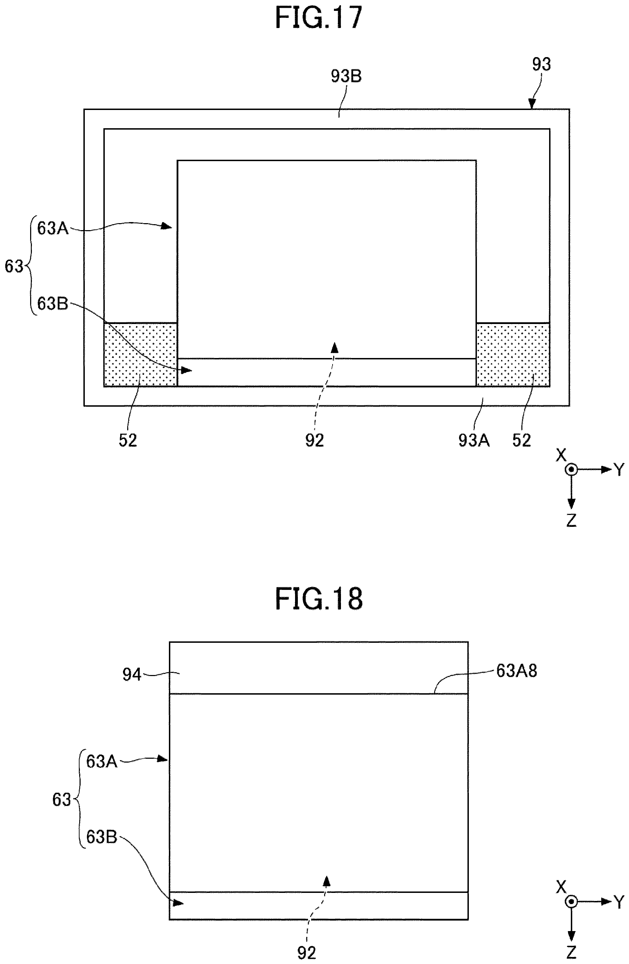

FIG. 17 is a diagram illustrating a first example of a method of preventing the sealing member 63B from coming off. FIG. 17 illustrates an example of the sintering step using the modeled object of the eighth example. As illustrated in FIG. 17, in the sintering step, the green body 63 is accommodated in a sintering container 93 and subjected to the sintering treatment. In the example of FIG. 17, the green body 63 is placed upside down such that the sealing member 63B is disposed on a bottom surface 93A side of the sintering container 93 with respect to the main body 63A in a state where the sealing member 63B seals the filling opening 92 of the main body 63A. Further, the second powder 52 is filled in the sintering container 93 up to a height at which the contact surface between the main body 63A and the sealing member 63B is covered.

Even when the modeled object is not provided with the retaining structure as in the ninth or tenth example, the use of the configuration illustrated in FIG. 17 for performing the sintering treatment can prevent the second powder 52 filled in the cavity 81 from leaking through the contact surface between the main body 63A side and the sealing member 63B side when the green body 63 shrinks in the sintering step S8.

FIG. 18 is a diagram illustrating a second example of a method of preventing the sealing member 63B from coming off. Also in FIG. 18, an example of placing the green body 63 in the sintering step using the modeled object of the eighth example is illustrated, and the sintering container 93 is not illustrated unlike FIG. 17.

In the example of FIG. 18, the green body 63 is also placed upside down such that the sealing member 63B is disposed on the bottom surface 93A side of the sintering container 93 with respect to the main body 63A in a state where the sealing member 63B seals the filling opening 92 of the main body 63A (see FIG. 17). Further, in this case, a weight 94 is placed on the surface of the green body 63 facing upward, that is, on a bottom surface 63A8 of the main body 63A. As a result, the green body 63 is in a state where a load is applied toward the bottom surface 93A side of the sintering container 93 (the lower side in FIG. 18).

Even when the modeled object is not provided with the retaining structure as in the ninth or tenth example, the use of the configuration illustrated in FIG. 18 for performing the sintering treatment can prevent the second powder 52 filled in the cavity 81 from leaking through the contact surface between the main body 63A and the sealing member 63B side when the green body 63 shrinks in the sintering step S8.

Although FIG. 18 illustrates an example of a method of placing the weight 94, another method may be applied as long as the green body 63 can be placed in a state where a load is applied toward the bottom surface 93A side of the sintering container 93. For example, as a configuration in which a top surface 93B (see FIG. 17) of the sintering container 93 is movable in the vertical direction, a configuration in which the top surface 93B is lowered to press the green body 63 downward may be used.

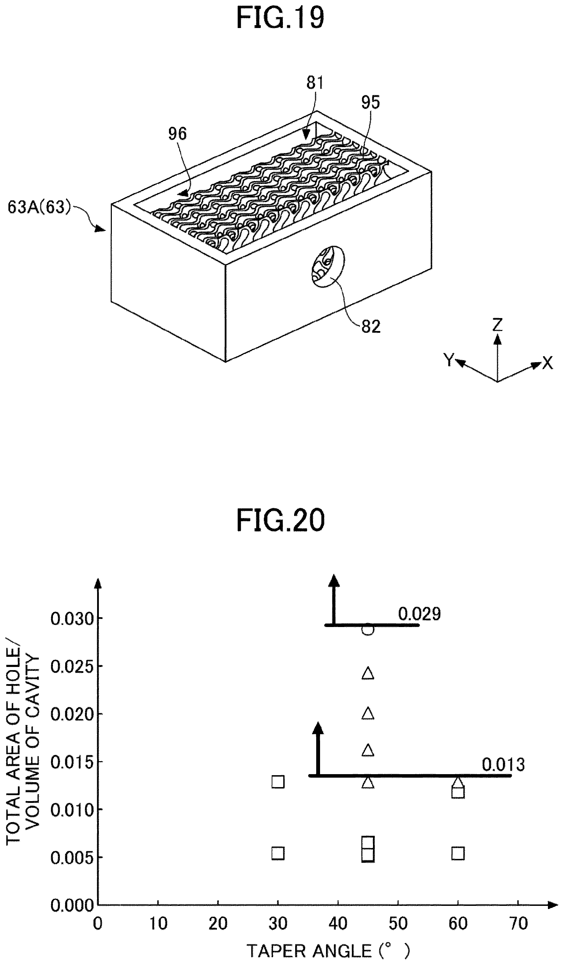

FIG. 19 is a diagram illustrating an example in which a gyroid structure 95 is provided in the internal cavity 81 of the modeled object. In the eighth to tenth examples of FIGS. 13A to 18, the sealing member 63B is provided mainly for the purpose of simplifying the filling of the second powder 52 in the cavity 81 in the filling step S6. On the other hand, in the powder removing step S5, the sealing member 63B may be provided only for the purpose of simplifying the removal of the excess powder 50 in the cavity 81.

For example, as illustrated in FIG. 19, in a configuration in which the gyroid structure 95 is provided in the internal cavity 81 of the modeled object, the cavity 81 can maintain its shape by the gyroid structure 95. Therefore, the second powder 52 does not necessarily have to be filled in the cavity 81 in order to prevent the deformation of the modeled object in the sintering step S8. On the other hand, in the configuration in which the gyroid structure 95 is provided in the internal cavity 81, the inside of the cavity 81 has a complicated shape, and thus it takes time and effort to remove the excess powder 50 in the cavity 81 in the powder removing step S5, and the required time will be relatively long.

Therefore, in the structure illustrated in FIG. 19, the sealing member 63B is formed separately from the main body 63A, and thus a powder removing opening 96 having a larger opening area than the openings 82 and 83 is provided in the main body 63A, and the cavity 81 can be opened by the powder removing opening 96. The powder removing opening 96 corresponds to the filling opening 92 of the eighth to tenth examples. In the example of FIG. 19, in the powder removing step S5, the excess powder 50 in the cavity 81 is removed through the powder removing opening 96, and the powder removing opening 96 is sealed by the sealing member 63B after the removal. In the example of FIG. 19, the filling step S6 is not performed, and the sintering step S8 is performed in a state where the second powder 52 is not filled in the cavity 81 and the powder removing opening 96 of the main body 63A is sealed by the sealing member 63B. Therefore, the removing step S9 is not performed.

Therefore, in the example of FIG. 19, since the excess powder 50 in the cavity 81 can be removed through the powder removing opening 96 having a larger opening area than the openings 82 and 83, the time for removing the excess powder 50 from the cavity 81 in the powder removing step can be significantly reduced, and the powder removing operation can be further simplified.

Next, an appropriate size of the opening 82 will be described with reference to FIG. 20.

FIG. 20 is a diagram illustrating a range of the hole diameters of the opening 82. In FIG. 20, the horizontal axis represents the taper angle of the opening 82, and the vertical axis represents the ratio of the total area of the hole of the opening 82 to the total volume of the cavity 81 (total area of hole/total volume of cavity). The "total area of the hole" herein refers to an area of cross section of the hole of the opening 82 when viewed from the axial direction. When a plurality of openings 82 are provided, the total value is the total value of the cross-sectional areas of all the holes.

A plurality of test modeled objects were formed with a plurality of combinations of the "taper angle" and the "total area of hole/volume of cavity", and the degree of deformation of the modeled object after the sintering step was confirmed. Each plot in FIG. 20 corresponds to a plurality of test modeled objects, and the type of each plot indicates the result of the degree of deformation. The circular plots indicate the result of "no deformation", that is, the result that no deformation such as distortion occurred in the modeled object after the sintering step. The triangular plots indicate "small deformation (can be handled by shape correction)", that is, slight deformation occurred in the modeled object after the sintering step, but the deformation was to the extent that the deformation can be covered by shape correction treatment such as correcting the shape of the model to be formed in advance. The square plot indicates the result of "large deformation".

The results of FIG. 20 indicate that the ratio of the area of the opening 82 to the volume of the internal cavity 81 is preferably 0.013 or more (the area of the opening/the volume of the internal cavity ≥ 0.013). By setting the ratio to 0.013 or more, deformation due to the inhibition of shrinkage of the second powder 52 during sintering can be prevented. To cope with the deformation, it is effective to correct the shape of the model to be formed in advance.

Furthermore, the results of FIG. 20 indicate that when the ratio is 0.029 or more, deformation due to inhibition of shrinkage of the second powder 52 during sintering does not occur. Therefore, for example, in the case where a portion requiring high surface accuracy such as an attachment surface is used as the modeled object, the ratio is preferably set to 0.029 or more.

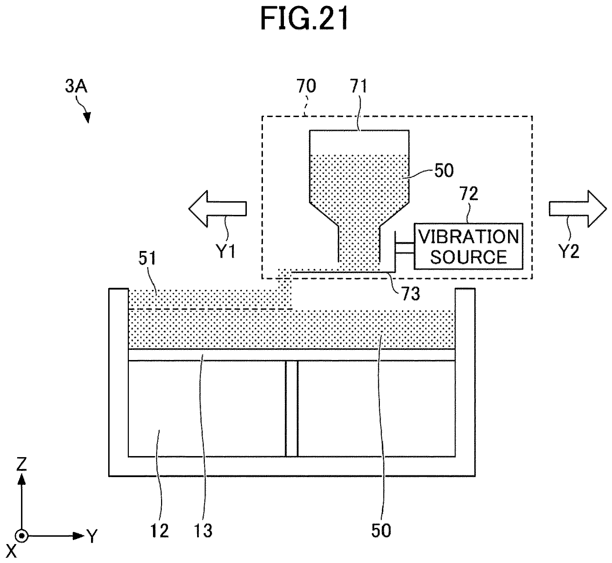

FIG. 21 is a diagram illustrating a modification of the modeling unit. The modeling unit 3A according to the modification illustrated in FIG. 21 includes a powder supplying unit 70 instead of the supplying tank 11 of the modeling unit 3 illustrated in FIG. 2. The description common to FIG. 3 is omitted as appropriate.

The powder supplying unit 70 supplies the first powder 50 to the powder layer 51 in the modeling tank 12. The powder supplying unit 70 is movable horizontally (in the Y1 and Y2 directions) and supplies the first powder 50 to the modeling tank 12 by scanning above the modeling tank 12.

The powder supplying unit 70 includes a hopper 71, a vibration source 72, and a trough 73.

The hopper 71 holds the first powder 50 to be supplied to the modeling tank 12.

The trough 73 supplies the first powder 50 to the modeling tank 12. The trough 73 is a supply path through which the first powder 50 held in the hopper 71 is supplied to the modeling tank 12. The length (width) of the trough 73 in the X direction is preferably the same as the length (width) of the modeling tank 12 in the X direction. The vibration source 72 vibrates the trough 73. The trough 73 is vibrated by the vibration source 72, and the first powder 50 falls into the modeling tank 12 from the opening of the trough 73.

The modeling unit 3A includes the applying unit 40, the laminating unit 30, and the excess powder tank 15. The powder supplying unit 70 as a modeling unit shapes the powder layer 51 containing the first powder 50 by supplying the powder. The applying unit 40 applies the modeling liquid 60 to the powder layer 51 to form the modeling layer 61. In the modeling unit 3A, a plurality of modeling layers 61 are laminated to form the modeled object.

The present embodiment has been described above with reference to specific examples. However, the present invention is not limited to these specific examples. Those skilled in the art may appropriately modify these specific examples, and such modifications are also encompassed within the scope of the present invention as long as they have the features of the present invention. The elements included in the specific examples described above, and the arrangement, conditions, shapes, and the like thereof are not limited to those illustrated above, and can be appropriately changed. The elements of the specific examples described above can be combined as appropriate as long as no technical contradiction occurs.

In the above embodiment, a single three dimensional modeling apparatus 1 is described as an example, but a three dimensional modeling system including a plurality of apparatuses may be used. The three dimensional modeling system includes a powder mixing apparatus, a printing apparatus, a drying apparatus, a powder removing apparatus, a filling apparatus, a sintering apparatus, a removing apparatus, a collecting apparatus, and a controller corresponding to the powder mixing unit 2, the modeling unit 3, the drying unit 4, the powder removing unit 5, the filling unit 6, the sintering unit 7, the removing unit 8, the collecting unit 9, and the controller 100, respectively. In the three dimensional modeling system, a plurality of apparatuses are connected to each other so as to be able to communicate with each other, and the plurality of apparatuses can perform a three dimensional modeling operation in conjunction with each other.

Further, the present invention is not limited to the above embodiment and modification, but various alterations and substitutions may be made without departing from the scope of the present invention.

Aspects of the present invention are disclosed as follows, for example.

### <Aspect 1>

A three dimensional modeling method for fabricating a modeled object having a cavity therein, the three dimensional modeling method comprising:
modeling the modeled object with first powder, the modeled object including an opening connecting the cavity and an outside of the modeled object;
filling the cavity with second powder from the opening;
sintering the modeled object whose cavity has been filled with the second powder in the filling; and
removing the second powder in the cavity from the opening.

### <Aspect 2>

The three dimensional modeling method according to aspect 1, wherein the first powder is a metal.

### <Aspect 3>

The three dimensional modeling method according to aspect 1 or 2, wherein a melting point of the second powder is higher than a sintering temperature in the sintering.

### <Aspect 4>

The three dimensional modeling method according to any one of aspects 1 to 3, wherein the modeling includes:
forming a powder layer with the first powder; and
applying a modeling liquid to the powder layer.

### <Aspect 5>

The three dimensional modeling method according to any one of aspects 1 to 4, wherein in the sintering, a part of the second powder is discharged from the cavity through the opening.

### <Aspect 6>

The three dimensional modeling method according to any one of aspects 1 to 5, wherein a diameter of the opening is smaller than a diameter of the cavity.

### <Aspect 7>

The three dimensional modeling method according to any one of aspects 1 to 6, wherein the opening is provided on a side surface of the modeled object.

### <Aspect 8>

The three dimensional modeling method according to any one of aspects 1 to 7, wherein the opening is provided at an end portion in a longitudinal direction of the cavity.

### <Aspect 9>

The three dimensional modeling method according to any one of aspects 1 to 8, wherein the opening in the modeled object includes a plurality of openings.

### <Aspect 10>

The three dimensional modeling method according to any one of aspects 1 to 9,
wherein the opening includes at least a first opening and a second opening, and
wherein the first opening is smaller than the second opening.

### <Aspect 11>

The three dimensional modeling method according to any one of aspects 1 to 10,
wherein the opening includes at least a first opening and a second opening, and
wherein the first opening and the second opening face each other with the cavity interposed therebetween.

### <Aspect 12>

The three dimensional modeling method according to any one of aspects 1 to 11,
wherein the opening includes at least a first opening and a second opening, and
wherein the first opening is on an axis extending from a portion of the second opening.

### <Aspect 13>

The three dimensional modeling method according to any one of aspects 1 to 12,
wherein the opening includes at least a first opening, a second opening, a third opening, and a fourth opening,
wherein the first opening and the second opening face each other with the cavity interposed therebetween, and
wherein the third opening and the fourth opening face each other with the cavity interposed therebetween.

### <Aspect 14>

The three dimensional modeling method according to any one of aspects 1 to 13,
wherein the opening includes at least a first opening, a second opening, a third opening, and a fourth opening,
wherein the first opening is on an axis extending from a portion of the second opening, and
wherein the third opening is on an axis extending from a portion of the fourth opening.

### <Aspect 15>

The three dimensional modeling method according to any one of aspects 1 to 14,
wherein the opening includes at least a first opening, a second opening, a third opening, and a fourth opening, and
wherein an axis extending from a center of the second opening toward the first opening and an axis extending from a center of the fourth opening toward the third opening are orthogonal to each other.

### <Aspect 16>

The three dimensional modeling method according to any one of aspects 1 to 15,
wherein the opening in the modeled object includes a plurality of openings, and
wherein each of the plurality of the openings is provided at a position equidistant from a center of the cavity.

### <Aspect 17>

The three dimensional modeling method according to any one of aspects 1 to 16, wherein the modeled object is provided with a taper at an end portion of at least one of a cavity side or an outer side of the opening.

### <Aspect 18>

The three dimensional modeling method according to any one of aspects 1 to 17,
wherein the cavity is a flow path formed in the modeled object, and
wherein the opening is an inlet and an outlet of the flow path.

### <Aspect 19>

A three dimensional modeling apparatus for fabricating a modeled object having a cavity therein, the three dimensional modeling apparatus comprising:
a modeling unit configured to model the modeled object with first powder, the modeled object including an opening connecting the cavity and an outside of the modeled object;
a filling unit configured to fill the cavity with second powder from the opening;
a sintering unit configured to sinter the modeled object whose cavity has been filled with the second powder by the filling unit; and
a removing unit configured to remove the second powder in the cavity from the opening.

### <Aspect 20>

A three dimensional modeling method for fabricating a modeled object having a cavity therein, the three dimensional modeling method comprising:
modeling the modeled object with first powder, the modeled object including an opening connecting the cavity and an outside of the modeled object, a filling opening differing from the opening, and a sealing member for sealing the filling opening;
filling the cavity with second powder through the filling opening, and sealing the filling opening with the sealing member after the filling;
sintering the modeled object whose cavity has been filled with the second powder in the filling; and
removing the second powder in the cavity from the opening.

### <Aspect 21>

The three dimensional modeling method according to aspect 20, further comprising:
removing excess powder from the modeled object after the modeling and before the filling,
wherein in the removing excess powder, the excess powder in the cavity is removed through the filling opening.

### <Aspect 22>

A three dimensional modeling method for fabricating a modeled object having a cavity therein, the three dimensional modeling method comprising:
modeling the modeled object with first powder, the modeled object including an opening connecting the cavity and an outside of the modeled object, a powder removing opening differing from the opening, and a sealing member for sealing the powder removing opening;
removing excess powder from the modeled object; and
sintering the modeled object,
wherein in the removing excess powder, the excess powder in the cavity is removed through the powder removing opening, and the powder removing opening is sealed by the sealing member after the removing excess powder.

### <Aspect 23>

The three dimensional modeling method according to aspect 6, wherein a ratio of an area of the opening to a volume of the cavity is 0.013 or more.

### DESCRIPTION OF SYMBOLS

- 1: three dimensional modeling apparatus
- 3: Modeling unit
- 6: Filling unit
- 7: Sintering unit
- 8: Removing unit
- 50: Powder (First Powder)
- 52: Second powder
- 62: Modeled object
- 63: Green body
- 63B: Sealing member
- 64: Three dimensionally modeled object
- 81: Cavity
- 82: Opening
- 92: Filling opening
- 96: Powder removing opening
- S3: Modeling step
- S5: Powder removing step
- S6: Filling step
- S8: Sintering step
- S9: Removing step

## Claims

1. A three dimensional modeling method for fabricating a modeled object having a cavity therein, the three dimensional modeling method comprising:
modeling the modeled object with first powder, the modeled object including an opening connecting the cavity and an outside of the modeled object;
filling the cavity with second powder from the opening;
sintering the modeled object whose cavity has been filled with the second powder in the filling; and
removing the second powder in the cavity from the opening.

2. The three dimensional modeling method according to claim 1, wherein the first powder is a metal.

3. The three dimensional modeling method according to claim 1, wherein a melting point of the second powder is higher than a sintering temperature in the sintering.

4. The three dimensional modeling method according to claim 1, wherein the modeling includes:
forming a powder layer with the first powder; and
applying a modeling liquid to the powder layer.

5. The three dimensional modeling method according to claim 1, wherein in the sintering, a part of the second powder is discharged from the cavity through the opening.

6. The three dimensional modeling method according to claim 1, wherein a diameter of the opening is smaller than a diameter of the cavity.

7. The three dimensional modeling method according to claim 1, wherein the opening is provided on a side surface of the modeled object.

8. The three dimensional modeling method according to claim 1, wherein the opening is provided at an end portion in a longitudinal direction of the cavity.

9. The three dimensional modeling method according to claim 1,
wherein the opening includes at least a first opening and a second opening, and
wherein the first opening is smaller than the second opening.

10. The three dimensional modeling method according to claim 1,
wherein the opening includes at least a first opening and a second opening, and
wherein the first opening and the second opening face each other with the cavity interposed therebetween.

11. The three dimensional modeling method according to claim 1,
wherein the opening includes at least a first opening and a second opening, and
wherein the first opening is on an axis extending from a portion of the second opening.

12. The three dimensional modeling method according to claim 1,
wherein the opening in the modeled object includes a plurality of openings, and
wherein each of the plurality of the openings is provided at a position equidistant from a center of the cavity.

13. The three dimensional modeling method according to claim 1,
wherein the cavity is a flow path formed in the modeled object, and
wherein the opening is an inlet and an outlet of the flow path.

14. The three dimensional modeling method according to claim 1,
wherein the modeled object includes a filling opening differing from the opening, and a sealing member for sealing the filling opening, and
wherein the three dimensional modeling method further includes filling the cavity with second powder through the filling opening, and sealing the filling opening with the sealing member after the filling.

15. The three dimensional modeling method according to claim 1,
wherein the modeled object includes a powder removing opening differing from the opening, and a sealing member for sealing the powder removing opening,
wherein three dimensional modeling method further includes removing excess powder from the modeled object, and
wherein in the removing excess powder, the excess powder in the cavity is removed through the powder removing opening, and the powder removing opening is sealed by the sealing member after the removing excess powder.
